# EUROPÄISCHE PATENTSCHRIFT

(11) **EP 1 146 168 B1**
(45) Veröffentlichungstag und Bekanntmachung des Hinweises auf die Patenterteilung: **26.04.2006**
(21) Anmeldenummer: 01104342.9
(22) Anmeldetag: 23.02.2001
(51) Int. Cl.: D21D 1/30, D21B 1/32

(54) **Vorrichtung zur Dispergierung von hochkonsistentem Papierfaserstoff**
Device for dispersing high consistency pulp
Dispositif pour disperser une pulpe de haute densité

(30) Priorität: 11.04.2000 DE 20006632 U
(43) Veröffentlichungstag der Anmeldung: 17.10.2001
(73) Patentinhaber: Voith Paper Patent GmbH, 89522 Heidenheim (DE)
(72) Erfinder: Niggl, Volker, 88250 Weingarten (DE); Kriebel, Almut, 88250 Weingarten (DE); Rauch, Roland, 88255 Baindt (DE); Schnell, Hans, 88512 Mengen (DE); Schneid, Josef, 88267 Vogt (DE)

(56) Entgegenhaltungen:
- EP-A- 0 886 001
- DE-A- 3 047 013
- DE-A- 19 523 704

## Beschreibung

Die Erfindung betrifft eine Vorrichtung zur Dispergierung gemäß dem Oberbegriff des Anspruchs 1.

Eine derartige Behandlungsvorrichtung ist zum Beispiel aus der DE-PS 30 47 013 bekannt. Diese zum Dispergieren von Altpapier geeignete Vorrichtung dient dazu, den Stoff intensiv mechanisch und thermisch zu bearbeiten, wodurch die darin enthaltenen Störstoffe von den Fasern abgelöst, zerkleinert und/oder unter die Sichtbarkeitsgrenze gebracht werden können. Anders als zum Beispiel bei Papierstoff-Mahlrefinern wird bei derartigen Maschinen der Faserstoff nicht in einer pumpfähigen Suspension bearbeitet, sondern in Form eines teigigen oder krümeligen Hochkonsistenzstoffes, vorzugsweise mit einem Trockengehalt zwischen 20 und 35 %. Auf diese Weise lassen sich beträchtlich höhere Scherkräfte in den Faserstoff übertragen, wodurch die genannten Ziele erreichbar sind, ohne dass dabei eine wesentliche Veränderung der Faserlänge erfolgt. In vielen Fällen wird die Wirkung der mechanischen Behandlung durch Hitze weiter verstärkt, z.B. durch Einstellen einer Faserstofftemperatur von 90° Celsius oder noch darüber.

Durch die hohe Konsistenz, die der Faserstoff bei der Behandlung hat, ist eine intensive mechanische Bearbeitung möglich, obwohl sich die Zähne der relativ zueinander bewegbaren Behandlungswerkzeuge, der sogenannten Garnituren, nicht berühren, sondern sich vielmehr in einem Abstand von ca. 0,5 mm oder mehr mit relativ hoher Geschwindigkeit aneinander vorbeibewegen. Günstig ist, dass bei Garnituren der beschriebenen Art eine sehr große Anzahl von Zähnen beteiligt ist, so dass der Papierstoff durch viele Schlitze (Zahnlücken) in kleine Teilströme aufgeteilt wird. Es sind ohne weiteres z.B. zwölf Stufen (Zahnreihen) hintereinander möglich. Nachdem der hochkonsistente Faserstoff den Bearbeitungsbereich passiert hat, also die Dispergierung erfolgt ist, tritt er an der letzten Stufe der Statorgarnitur aus. Dabei wird er durch den nachfolgenden Stoff herausgedrückt und führt eine im wesentlichen radiale Bewegung aus.

Garnituren dieser Art sind kompakt und haben eine ausgezeichnete Dispergierwirkung. Sie setzen allerdings einen gleichmäßigen Stoffstrom voraus, damit auch die Dispergierung gleichmäßig ist. Aus diesem Grunde wird in bekannter Weise bereits dafür gesorgt, dass der zu dispergierende Stoff möglichst gleichmäßig in die Dispergiervorrichtung eingegeben wird. Da der Stoff nicht fließfähig ist, wird fast immer eine irgendwie geartete Förderschnecke eingesetzt. Trotz dieser an sich richtigen Maßnahme tritt jedoch in bestimmten Fällen ein ungleichmäßiger Stofffluss durch die Garnitur auf, was auf die an sich gewünschte gute Radialförderung in der Garnitur auf Grund der Zentrifugalkräfte zurückzuführen ist.

In der DE 195 23 704 ist bereits ein Vorschlag gemacht worden, den unkontrollierten Durchsatz durch Dispergergarnituren dieser Art dadurch zu verhindern, dass eine spezielle Austragsvorrichtung an der Peripherie der Statorgarnitur angebracht wurde. Diese hat zwar den Vorteil einer guten Funktion und auch den, dass sie verstellbar gemacht werden kann, sie wird aber mit einigem Mehraufwand und erhöhtem Platzbedarf erkauft.

Der Erfindung liegt die Aufgabe zu Grunde, die Dispergiervorrichtung so zu verbessern, dass mit sehr geringem Aufwand der Durchfluss durch die Garnituren vergleichmäßigt und eventuell abgebremst wird. Die Verbesserung soll insbesondere dann möglich sein, wenn die Garnituren mit Zähnen ausgerüstet sind, deren Zahnflanken konisch geformt sind.

Diese Aufgabe wird durch die im Kennzeichen des Anspruchs 1 genannten Merkmale vollständig gelöst.

Die Erfindung und ihre Vorteile werden erläutert an Hand von Zeichnungen. Dabei zeigen:
- Fig. 1: einen Teil einer erfindungsgemäßen Vorrichtung in geschnittener Seitenansicht;
- Fig. 2: eine Variante mit Dampfeinspeisung;
- Fig. 3: Aufsicht auf eine Garnitur von der Stoffseite her;
- Fig. 4: eine Detailansicht zweier im Eingriff stehender Garnituren.

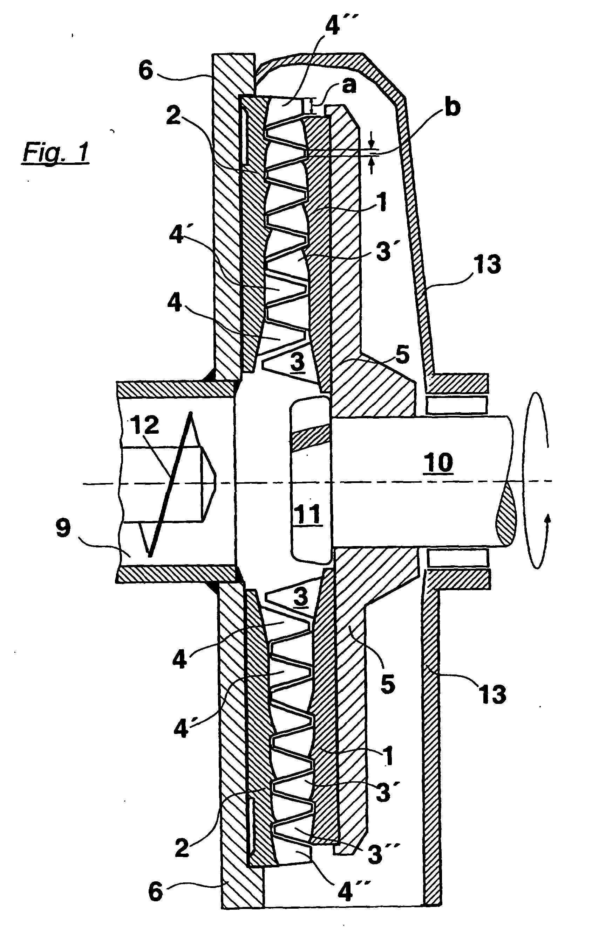

Fig. 1 zeigt einen Teil einer Dispergiervorrichtung mit zwei relativ zueinander in Umfangsrichtung bewegbaren komplementären Garnituren, die miteinander so in Eingriff stehen, dass sie zusammenwirken können. Sie werden so zueinander angeordnet, dass überall ein minimaler Abstand zwischen relativ zueinander bewegten Flächen eingehalten wird; dieser kann mit Vorteil größer als 1 mm sein. Die gewählte Darstellung in Form eines Schnittes in Seitenansicht lässt erkennen, dass sich radial von innen nach außen die zu den verschiedenen Garnituren gehörenden Zähne 3, 4, 3', 4' usw. bis zu den äußeren Zähnen 3", 4" abwechseln. Die Zahnreihe einer Garnitur reicht jeweils in den Zwischenraum der komplementären Garnitur, wobei zum bestimmungsgemäßen Betrieb der Vorrichtung zwischen den Zähnen von komplementären Garnituren Abstände eingehalten werden müssen. Die links gezeichnete Statorgarnitur 2 gehört zum Stator 6 und die rechts gezeichnete Rotorgarnitur 1 zum Rotor 5. Dieser wird von einer Welle 10 gehalten und in Rotation versetzt. Der hochkonsistente Papierfaserstoff gelangt durch das Zulaufrohr 9 mit Hilfe einer Förderschnecke 12 zentral in den Disperger. Ein solcher Stoff ist relativ zäh, anders als z.B. eine pumpfähige Papierfasersuspension, wie sie in Entstippem oder Refinern verarbeitet wird. Er wird zunächst vom Schleuderkreuz 11 erfasst und dann in die Garnituren gefördert. Die radial innerste Zahnreihe gehört zur Rotorgarnitur 1 und die radial äußerste zur Statorgarnitur 2. Die Rotationsachse des Rotors 5 liegt hier waagerecht, und die Radialtransportrichtung des hochkonsistenten Papierfaserstoffes liegt in senkrechten Ebenen. Die Garnituren sind in einem Gehäuse 13 untergebracht.

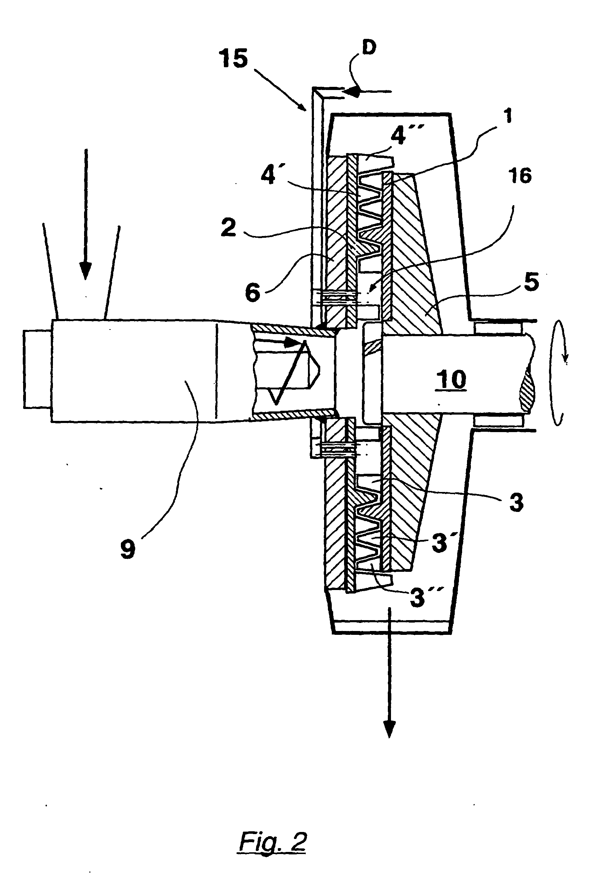

Die hier gezeichneten Garnituren sind besonders geeignet, um bereits aufgeheizten Papierfaserstoff zu bearbeiten. Bekanntlich gibt es auch andere Garnituren, bei denen die Möglichkeit besteht, Heizdampf direkt, und zwar zwischen Rotor- und Statorgarnitur, einzuspeisen. Ein solches Beispiel zeigt die Figur 2. In den Garnituren befindet sich eine Aufheizzone 16, in die Heizdampf D durch eine Dampfeinspeisung 15 direkt in den aufzuheizenden Stoff zugegeben werden kann. Dadurch entfällt die separate Aufheizung vor dem Disperger. Es hat sich gezeigt, dass gerade dann ein gleichmäßiger, eventuell abgebremster Durchfluss durch die Garnituren besonders wichtig ist, also die erfindungsgemäße Vorrichtung besondere Vorteile bietet.

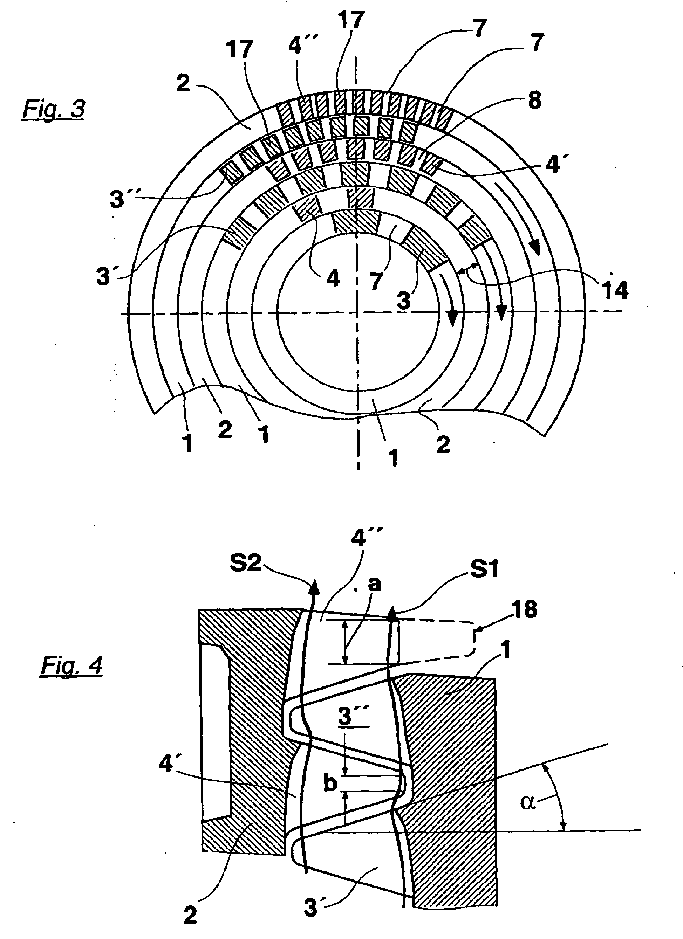

Fig. 3 zeigt in Aufsicht einen Dispergergarniturensatz, also eine Rotorgarnitur 1 und eine Statorgarnitur 2. Man erkennt die ringförmigen Zwischenräume 14. Auch die Zähne 3, 3', 3", 4, 4', 4" (geschnitten gezeichnet) sind in ringförmigen Reihen angeordnet und reichen in die entsprechenden Zwischenräume 14 der Gegengarnitur hinein. Von der Vielzahl der Zähne sind nur einige dargestellt. Die Form der Zähne richtet sich nach dem Verwendungszweck der Garnitur. Mit Vorteil ist der Querschnitt 17, der durch Schnitt in radialer Ebene gebildet wird, ein Viereck, insbesondere ein Rechteck. Die Querschnitte 17 können an den Ecken leicht gerundet sein, z.B. bei gegossenen Garnituren. Zähne mit solchen Querschnitten sind im Allgemeinen für das Dispergieren von hochkonsistentem Faserstoff optimal.

Zwischen benachbarten Zähnen werden Kanäle 7, 8 gebildet, die für den Durchfluss des Faserstoffes zur Verfügung stehen. Dabei wechseln sich die Kanäle zwischen Rotor und Stator in radialer Richtung ab, liegen also in einer gemeinsamen radialen Flucht. Von diesen Kanälen ist in der Fig. 1 jeweils die axiale und radiale Erstreckung durch Aufsicht auf die entsprechenden Zähne sichtbar. Man erkennt dort auch, dass die kürzeste Radialerstreckung a des Kanales, der zwischen den radial am weitesten außen liegenden Zähnen 4" der Statorgarnitur 2 gebildet wird, beträchtlich länger ist als die kürzeste radiale Erstreckung b des Kanals zwischen den radial innen benachbarten Zähnen 4' dieser Statorgarnitur 2.

Etwas deutlicher werden die Verhältnisse durch Darstellung der Fig. 4. In dieser Figur sind zwei komplementäre, also zu einem Satz gehörende Garnituren etwas detaillierter gezeichnet, ohne allerdings alle konstruktiven Merkmale zu offenbaren. Die Zähne sind konisch geformt, d.h. die Zahnfüße haben eine längere Radialerstreckung als die Zahnspitzen. Günstig ist ein Flankenwinkel α zwischen 15 und 30°. Schräge Flanken haben den Vorteil, dass die axiale Verstellung der Garnituren zu einer Änderung der Dispergierwirkung führt, was in vielen Fällen gewünscht ist und Vorteile hat. In der Regel haben Garnituren dieser Art zwischen drei und zwölf Zahnreihen, hier sind nur die radial äußersten zwei gezeichnet. Der im Zahnspitzenbereich der Statorgarnitur 2 und im Zahnfußbereich der Rotorgarnitur 1 fließende Stoffstrom S1 ist hier andeutungsweise dargestellt. Ähnlich auch der Stoffstrom S2 im Zahnspitzenbereich der Rotorgarnitur 1. Diese Stoffströme bewegen sich radial von innen nach außen, wobei sich diesen durch Pfeile dargestellten Bewegungen die Umfangsbewegung des Stoffes in den umlaufenden Zahnzwischenräumen überlagert. Der radial äußerste Zahn 3" der Rotorgarnitur 1 dreht mit hoher Umfangsgeschwindigkeit und schleudert den Stoff in den nachfolgenden stillstehenden Kanal 7. Wird nun erfindungsgemäß dieser Kanal auf der ganzen Breite, die von Stoff durchflossen wird, lang genug gehalten, kann er einen Gegendruck erzeugen, der das ungewollte Leerschleudem der Garnituren verhindert. Diese Maßnahme ist einfach durchzuführen, da lediglich die ohnehin vorhandenen Zähne anders zu formen sind.

Auch für den Fall, dass der Kopf 18 der äußersten Zähne 4" axial über die der übrigen Zähne 4' dieser Garnitur hinausreichen würde (in Fig. 4 gestrichelt gezeichnet), würde sich dadurch die angegebene Radialerstreckung a nicht ändern. Der hinausreichende Teil bildet keinen Kanal, der in radialer Flucht der Kanäle 7 bzw. 8 liegt.

## Patentansprüche

1. Vorrichtung zur Dispergierung von hochkonsistentem Faserstoff, die mindestens zwei Garnituren, und zwar eine Rotorgarnitur (1) und eine Statorgarnitur (2) hat,
1.1 die jeweils eine im wesentlichen rotationssymmetrische Form haben und koaxial zueinander angeordnet sind,
1.2 die in ringförmigen, zu ihrer Mitte konzentrischen Reihen angeordnete Zähne (3, 3', 3", 4, 4', 4") aufweisen, zwischen welchen sich Kanäle (7, 8) befinden, die bei Betrieb der Vorrichtung von dem zu behandelnden Faserstoff durchströmt werden,
1.3 die zwischen den Zahnreihen ringförmige Zwischenräume (14) aufweisen,
1.4 die so zueinander positioniert sind, dass mindestens eine Zahnreihe einer Garnitur in einen ringförmigen Zwischenraum (14) der anderen, komplementären Garnitur hineinreicht, und dass die Kanäle (7, 8) der komplementären Garnituren sich in radialer Richtung abwechseln,
1.5 wobei die Rotorgarnitur (1) relativ zur anderen in Umfangsrichtung bewegbar ist,
**dadurch gekennzeichnet,**
**dass** die kürzeste Radialerstreckung (a) der Kanäle (7), die zwischen radial weiter außen liegenden Zähnen (4") der Statorgarnitur (2) gebildet werden, mindestens doppelt so lang ist wie die kürzeste Radialerstreckung (b) der Kanäle (8) der radial innen benachbarten Zähne (4') dieser Statorgarnitur (2).

2. Vorrichtung nach Anspruch 1,
**dadurch gekennzeichnet,**
**dass** die kürzeste Radialerstreckung (a) der Kanäle (7) die zwischen den radial am weitesten außen liegenden Zähnen (4'') der Statorgarnitur (2) gebildet werden, mindestens doppelt so lang ist wie die kürzeste Radialerstreckung (b) der Kanäle (8) der radial innen benachbarten Zähne (4') dieser Statorgarnitur (2).

3. Vorrichtung nach Anspruch 1 oder 2,
**dadurch gekennzeichnet,**
**dass** die kürzeste Radialerstreckung (a) der Kanäle (7) radial weiter außen mindestens drei Mal so lang ist wie die kürzeste Radialerstreckung (b) an den radial innen benachbarten Zähnen (4') der Statorgarnitur (2).

4. Vorrichtung nach Anspruch 1, 2 oder 3,
**dadurch gekennzeichnet,**
**dass** die kürzeste Radialerstreckung (a, b) der Kanäle (7, 8) der Radialerstreckung der entsprechenden Zahnspitzen entspricht.

5. Vorrichtung nach Anspruch 1 oder 2,
**dadurch gekennzeichnet,**
**dass** die kürzeste Radialerstreckung (a) der äußersten Zahnreihe mindestens 5 mm beträgt.

6. Vorrichtung nach einem der voranstehenden Ansprüche,
**dadurch gekennzeichnet,**
**dass** der Flankenwinkel (α) der mit Gegenzähnen zusammenwirkenden Zahnflanken gegenüber der Achsrichtung zwischen 10° und 45°, vorzugsweise 15° und 30°, beträgt.

7. Vorrichtung nach einem der voranstehenden Ansprüche,
**dadurch gekennzeichnet,**
**dass** der Kopf (18) der äußersten Zähne (4'') der Statorgarnitur (2) axial über die der übrigen Zähne (4,4') dieser Garnitur hinausragt.

8. Vorrichtung nach einem der voranstehenden Ansprüche,
**dadurch gekennzeichnet,**
**dass** der in radialer Ebene liegende Querschnitt (17) der Zähne (3, 3', 3", 4, 4', 4") eine Viereckform hat.

9. Vorrichtung nach Anspruch 8,
**dadurch gekennzeichnet,**
**dass** der in radialer Ebene liegende Querschnitt (17) der Zähne (3, 3', 3", 4, 4', 4") eine Rechteckform hat.

10. Vorrichtung nach Anspruch 8 oder 9,
**dadurch gekennzeichnet,**
**dass** die Querschnitte (17) abgerundet sind.

11. Vorrichtung nach einem der voranstehenden Ansprüche,
**dadurch gekennzeichnet,**
**dass** der minimale Abstand, den die Zähne (3, 3', 3", 4, 4', 4'') der zueinander bewegbaren Garnituren voneinander haben, zwischen 1 und 5 mm beträgt.

12. Vorrichtung nach einem der voranstehenden Ansprüche,
**dadurch gekennzeichnet,**
**dass** die Garnituren eine ringförmige Aufheizzone(16)aufweisen, in die Heizdampf (D) eingespeist werden kann.

13. Vorrichtung nach Anspruch 12,
**dadurch gekennzeichnet,**
**dass** die Aufheizzone (16) radial innerhalb der zur Dispergierung dienenden Zahnreihen liegt.

## Revendications

1. Dispositif de dispersion de matière fibreuse de haute consistance, comportant au moins deux garnitures, à savoir une garniture (1) de rotor et une garniture (2) de stator, qui
1.1 ont sensiblement une forme de révolution symétrique et sont disposées coaxialement l'une par rapport à l'autre,
1.2 comportent des dents (3, 3', 3", 4, 4', 4") disposées en rangées annulaires concentriques vers leur centre, entre lesquelles se trouvent des canaux (7, 8) qui sont traversés par la matière fibreuse à traiter lors du fonctionnement du dispositif,
1.3 comportent des espaces intermédiaires annulaires (14) entre les rangées de dents,
1.4 sont positionnées l'une par rapport à l'autre de telle sorte qu'au moins une rangée de dents d'une garniture pénètre dans un espace intermédiaire annulaire (14) de l'autre garniture complémentaire, et que les canaux (7, 8) de la garniture complémentaire s'alternent dans la direction radiale,
1.5 la garniture (1) de rotor pouvant être déplacée dans la direction périphérique par rapport à l'autre,
**caractérisé en ce que**
l'extension radiale (a) la plus courte des canaux (7), qui sont formés entre des dents (4") situées radialement plus à l'extérieur de la garniture (2) de stator, est au moins deux fois plus longue que l'extension radiale (b) la plus courte des canaux (8) des dents (4') adjacentes radialement intérieures de cette garniture (2) de stator.

2. Dispositif selon la revendication 1,
**caractérisé en ce que**
l'extension radiale (a) la plus courte des canaux (7), qui sont formés entre les dents (4") situées radialement le plus à l'extêrieur de la garniture (2) de stator, est au moins deux fois plus longue que l'extension radiale (b) la plus courte des canaux (8) des dents (4') adjacentes radialement intérieures de cette garniture (2) de stator.

3. Dispositif selon la revendication 1 ou 2,
**caractérisé en ce que**
l'extension radiale (a) la plus courte des canaux (7) radialement plus à l'extérieur est au moins trois fois plus longue que l'extension radiale (b) la plus courte au niveau des dents (4') adjacentes radialement intérieures de la garniture (2) de stator.

4. Dispositif selon la revendication 1, 2 ou 3,
**caractérisé en ce que**
l'extension radiale (a, b) la plus courte des canaux (7, 8) correspond à l'extension radiale des pointes des dents correspondantes.

5. Dispositif selon la revendication 1 ou 2,
**caractérisé en ce que**
l'extension radiale (a) la plus courte de la rangée de dents la plus à l'extérieur est au moins de 5 mm.

6. Dispositif selon l'une des revendications précédentes,
**caractérisé en ce que**,
par rapport à la direction axiale, l'angle (α) des flancs de dents agissant conjointement avec des dents antagonistes est compris entre 10°, et 45°, de préférence entre 15° et 30°.

7. Dispositif selon l'une des revendications précédentes,
**caractérisé en ce que**
la tête (18) des dents (4") situées le plus à l'extérieur de la garniture (2) de stator dépasse axialement au-dessus de celle des autres dents (4, 4') de cette garniture.

8. Dispositif selon l'une des revendications précédentes,
**caractérisé en ce que**
la section transversale (17) située dans le plan radial des dents (3, 3', 3", 4, 4', 4") est de forme quadrangulaire.

9. Dispositif selon la revendication 8,
**caractérisé en** ee que
la section transversale (17) située dans le plan radial des dents (3, 3', 3'', 4, 4', 4") est de forme rectangulaire.

10. Dispositif selon la revendication 8 ou 9,
**caractérisé en ce que**
les sections transversales (17) sont arrondies.

11. Dispositif selon l'une des revendications précédentes,
**caractérisé en ce que**
l'écartement minimal entre les dents (3, 3', 3", 4, 4', 4") des garnitures pouvant être déplacées l'une par rapport à l'autre est compris entre 1 et 5 mm.

12. Dispositif selon l'une des revendications précédentes,
**caractérisé en ce que**
les garnitures comportent une zone de réchauffage (16) annulaire, dans laquelle peut être introduite de la vapeur de chauffage (D).

13. Dispositif selon la revendication 12,
**caractérisé en ce que**
la zone de réchauffage (16) est située radialement à l'intérieur des rangées de dents servant à la dispersion.

## Claims

1. Device for dispersing high-consistency pulp which has at least two fittings, namely a rotor fitting (1) and a stator fitting (2),
1.1 which in each case have a substantially rotationally symmetrical shape and are disposed coaxially with one another;
1.2 which comprise teeth (3, 3', 3", 4, 4', 4") which are disposed in ring-shaped rows, concentric with their centre, and between which channels (7, 8) are located, through which channels the pulp to be treated flows when the device is operating,
1.3 which comprise ring-shaped interspaces (14) between the rows of teeth,
1.4 which are positioned relative to one another such that at least one row of teeth of one fitting reaches into a ring-shaped interspace (14) of the other, complementary fitting, and that the channels (7, 8) of the complementary fittings alternate in the radial direction, wherein the rotor fitting (1) can move relative to the other in the circumferential direction,
**characterised in**
**that** the shortest radial extent (a) of the channels (7), which are formed between teeth (4") of the stator fitting (2) which lie radially further out, is at least twice as long as the shortest radial extent (b) of the channels (8) of the teeth (4') of this stator fitting (2) which are adjacent on the radial inside.

2. Device according to Claim 1,
**characterised in**
**that** the shortest radial extent (a) of the channels (7), which are formed between the teeth (4") of the stator fitting (2) which lie radially the furthest out, is at least twice as long as the shortest radial extent (b) of the channels (8) of the teeth (4') of this stator fitting (2) which are adjacent on the radial inside.

3. Device according to Claim 1 or 2,
**characterised in**
**that** the shortest radial extent (a) of the channels (7) radially further out is at least three times as long as the shortest radial extent (b) at the teeth (4') of the stator fitting (2) which are adjacent on the radial inside.

4. Device according to Claim 1, 2 or 3,
**characterised in**
**that** the shortest radial extent (a, b) of the channels (7, 8) corresponds to the radial extent of the corresponding tooth crests.

5. Device according to Claim 1 or 2,
**characterised in**
**that** the shortest radial extent (a) of the outermost row of teeth is at least 5 mm.

6. Device according to any one of the preceding Claims,
**characterised in**
**that** the flank angle (α) of the tooth flanks co-operating with mating teeth is between 10° and 45°, preferably 15° and 30°, with respect to the axial direction.

7. Device according to any one of the preceding Claims,
**characterised in**
**that** the head (18) of the outermost teeth (4") of the stator fitting (2) projects axially beyond those of the other teeth (4, 4') of this fitting.

8. Device according to any one of the preceding Claims,
**characterised in**
**that** the cross section (17) of the teeth (3, 3', 3", 4, 4', 4"), which lies in the radial plane, is of a quadrilateral shape.

9. Device according to Claim 8,
**characterised in**
**that** the cross section (17) of the teeth (3, 3', 3", 4, 4', 4"), which lies in the radial plane, is of a rectangular shape.

10. Device according to Claim 8 or 9,
**characterised in**
**that** the cross sections (17) are rounded.

11. Device according to any one of the preceding Claims,
**characterised in**
**that** the minimum distance between the teeth (3, 3', 3", 4, 4', 4") of the fittings, which can move relative to one another, is between 1 and 5 mm.

12. Device according to any one of the preceding Claims,
**characterised in**
**that** the fittings comprise a ring-shaped heating zone (16), into which heating steam (D) can be fed.

13. Device according to Claim 12,
**characterised in**
**that** the heating zone (16) lies radially inside of the rows of teeth serving for the dispersion.
